# EUROPÄISCHE PATENTSCHRIFT

(11) **EP 1 208 128 B1**
(45) Veröffentlichungstag und Bekanntmachung des Hinweises auf die Patenterteilung: **01.10.2003**
(21) Anmeldenummer: 00956189.5
(22) Anmeldetag: 17.07.2000
(51) Int. Cl.: C08G 18/12, C08G 59/50, C08G 18/40, C08G 18/66, C09D 175/02

(54) **HARNSTOFFGRUPPEN AUFWEISENDE POLYAMINE, VERFAHREN ZU IHRER HERSTELLUNG SOWIE IHRE VERWENDUNG ALS HÄRTER FÜR EPOXIDHARZE**
POLYAMINES COMPRISING UREA GROUPS, METHOD FOR THEIR PRODUCTION, AND THEIR USE AS HARDENERS FOR EPOXIDE RESINS
POLYAMINES COMPORTANT DES GROUPES UREE, PROCEDE PERMETTANT DE LES PREPARER ET LEUR UTILISATION COMME DURCISSEURS DE RESINES EPOXYDES

(30) Priorität: 28.07.1999 DE 19935329
(43) Veröffentlichungstag der Anmeldung: 29.05.2002
(73) Patentinhaber: Bayer Aktiengesellschaft, 51368 Leverkusen (DE)
(72) Erfinder: TILLACK, Jörg, 40764 Langenfeld (DE); SCHMALSTIEG, Lutz, 50676 Köln (DE); PUETZ, Wolfgang, 46596 Hünxe (DE); RUTTMANN, Gerhard, 51399 Burscheid (DE)
(86) Internationale Anmeldenummer: EP0006803
(87) Internationale Veröffentlichungsnummer: WO01009215

(56) Entgegenhaltungen:
- EP-A- 0 950 675
- DE-A- 4 200 172
- US-A- 4 435 558
- PATENT ABSTRACTS OF JAPAN vol. 1998, no. 12, 31. Oktober 1998 (1998-10-31) & JP 10 195290 A (ASAHI GLASS CO LTD), 28. Juli 1998 (1998-07-28)

## Beschreibung

Die vorliegende Erfindung betrifft Harnstoffgruppen aufweisende Polyamine, ein Verfahren zu deren Herstellung sowie deren Verwendung zur Herstellung von Klebstoffen, Dichtungsmassen, Vergußmassen, Formteilen oder Beschichtungen.

Polyamin/Epoxidharz-Systeme zeichnen sich u.a. durch exzellente Metallhaftung, sehr gute Chemikalienbeständigkeit und hervorragende Korrosionsschutzeigenschaften aus. Bei lösemittelhaltigen Formulierungen und Pulverlacksystemen können durch den Einsatz von Epoxidharzen mit hohen Molmassen und/oder Polyaminoamiden, z.B. auf der Basis von Dimerfettsäuren, als Härter vernetzte Filme mit hoher Flexibilität erhalten werden. Beschichtungen auf der Basis von lösemittelfreien Flüssigharzen und lösemittelfreien, aminischen Härtern sind aufgrund der niedrigen Molmassen der Epoxidharze und der daraus resultierenden hohen Netzwerkdichte spröde. Daher kommen in lösemittelfreien Formulierungen heutzutage z.B. Teerersatzstoffe, z.B. Cumaronharze, zur Plastifizierung zum Einsatz. Insbesondere bei Verwendung größerer Mengen an Kohlenwasserstoffharzen neigen derartige Beschichtungen, infolge Migration der nichtfunktionellen Bestandteile, zur Langzeitversprödung.

Eine gute und dauerhafte Elastifizierung der Epoxidharze läßt sich durch Kombination mit Polyurethanen erreichen. So wurden z.B. in der DE-A 23 38 256 hochmolekulare aminterminierte Polyetherurethanharnstoffe durch Reaktion von freien Isocyanatgruppen enthaltenden Prepolymeren mit Aminen in stark verdünnten Lösungen hergestellt und anschließend mit Epoxidharzen ausgehärtet.

Der Einsatz der hierzu erforderlichen, insbesondere aromatischen Lösungsmittel ist in der Praxis sowohl vom technischen als auch physiologischen Standpunkt aus nachteilig. Andererseits ist die Viskosität der lösemittelfreien Reaktionsprodukte, wie sie gemäß der DE-A 23 38 256 gezielt hergestellt werden, für die Anwendung in der Praxis zu hoch.

In der DE-A 24 18 041 wird ein Verfahren zur Herstellung von elastifizierten Formteilen und Flächengebilden beschrieben, bei dem Epoxid- mit Aminverbindungen umgesetzt werden, die durch Hydrolyse prepolymerer Ketimine bzw. Enamine erhalten werden. Mit diesem Verfahren sind chemikalienfeste, gut haftende Duromere mit verbesserten Eigenschaften herstellbar. Jedoch ist das beschriebene Verfahren verfahrenstechnisch aufwendig.

Die DE-A 21 52 606 beschreibt Reaktivsysteme auf Basis Alkylphenol-blockierter Polyisocyanate und Polyamine, die gegebenenfalls auch in Kombination mit Epoxidharzen ausgehärtet werden können. Auch diese Reaktivsysteme sind mit einigen anwendungstechnischen Nachteilen behaftet: Zum einen ist das freiwerdende Blockierungsmittel von vergleichsweise niedrigem Molekulargewicht, so daß es mit der Zeit aus der Beschichtung auswandert, was zu Haftungsproblemen führen kann. Zum anderen haben Reaktivsysteme auf der Basis von Alkylphenol-blockierten Polyisocyanaten und Polyaminen eine Vergleichsweise hohe Viskosität und das Niveau der mechanischen Eigenschaften der Endprodukte genügt nicht allen Anforderungen.

Im Gegensatz hierzu wird in der EP-A 480 139 ein Verfahren zur Umsetzung von nicht blockierten NCO-Prepolymeren mit Polyaminen bei Temperaturen von 140-170°C beschrieben. Dieses Verfahren ist allerdings wegen der zu hohen Reaktivität von aromatischen Isocyanatgruppen bezüglich der Reaktion mit Aminen lediglich auf Prepolymere mit aliphatischen bzw. cycloaliphatischen Isocyanatgruppen anwendbar. Da aliphatische und cycloaliphatische Isocyanate nur aufwendiger (teurer) hergestellt werden können als aromatische Isocyanate, haben nach diesem Verfahren hergestellte Polyurethanharnstoffamine bis jetzt keine technische Bedeutung.

Um eine gezielte Reaktion von Polyisocyanatprepolymeren mit überschüssigen Mengen Diamin zu ermöglichen, wurde daher vielfach vorgeschlagen, die Polyisocyanate in blokkierter Form einzusetzen, so z.B. beschrieben in CA-A 12 19 986, EP-A 293 110 oder EP-A 82 983. Diese Veröffentlichungen lehren, als bevorzugte Blockierungsmittel Phenole oder substituierte Phenole einzusetzen. Nach erfolgter Umsetzung mit den Polyaminen können diese Phenole aufgrund ihres hohen Siedepunkts nicht oder nur unvollständig destillativ aus dem Reaktionsgemisch entfernt werden. Das Verbleiben dieser gegebenenfalls substituierten Phenole in der Abmischung bzw. in der Kunststoffmasse führt aber zu den bereits erwähnten Nachteilen. Weiterhin wird in diesen Veröffentlichungen darauf hingewiesen, daß prinzipiell auch die anderen in der Polyurethanchemie üblichen Blockierungsmittel verwendet werden können, z.B. Oxime, Caprolactam, Malonsäureester und Acetessigester. Da aber keines dieser Blockierungsmittel im Verlauf der Epoxidhärtung in das Polymergerüst eingebaut werden kann, finden derartige Verbindungen normalerweise keine Verwendung in der herkömmlichen Amin-Epoxid-Chemie. Die Verwendung solcher Blockierungsmittel anstelle der bevorzugt eingesetzten, gegebenenfalls substituierten Phenole zeigt keine großen Vorteile.

Gemäß der EP-A 457 089 werden dagegen sekundäre Amine mit vorzugsweise niedrigem Siedepunkt als Blockierungsmittel eingesetzt. Verbleiben diese Amine nach der Deblockierung in der Reaktionsmischung, kommt es leicht zu einem langsamen Abdampfen der stark riechenden Verbindungen (Geruchsbelästigung). Nach dem Einsatz in Epoxid-Systemen kann das sekundäre Amin zwar prinzipiell in das System eingebaut werden, was allerdings, vor allem bei Anwendungen bei tiefen Temperaturen (z.B. Raumtemperatur), relativ langsam geschieht, so daß ein Teil der Amine vor der Umsetzung verdunstet. In einer besonders bevorzugten Anwendung wird das aminische Blockierungsmittel nach der Deblockierung aus dem Reaktionsgemisch abdestilliert. Diese Verfahrensweise führt zwar zu Produkten ohne Ausgasungen (Geruchsbelästigung), ist aber sehr aufwendig.

Es war daher die Aufgabe der Erfindung, elastifizierende, aminische Härter-Gemische für Epoxidharze zur Verfügung zu stellen, die nicht mit den Nachteilen der Systeme des Standes der Technik behaftet sind.

Die Aufgabe konnte mit der Bereitstellung der nachfolgend näher beschriebenen erfindungsgemäßen Härter-Gemische bzw. des Verfahrens zu ihrer Herstellung gelöst werden.

Gegenstand der vorliegenden Erfindung sind harnstoffgruppenhaltige, aminische Härter-Gemische für Epoxidharze, hergestellt durch die Umsetzung von
A) einer Polyisocyanatkomponente, bestehend aus mindestens einem organischen Polyisocyanat, dessen NCO-Gruppen zu mindestens 95 Mol-% durch Reaktion mit mindestens einem, phenolische OH-Gruppen aufweisenden Kohlenwasserstoffharz mit einem Hydroxylgruppengehalt, berechnet als OH, Molekulargewicht = 17, von 0,1 % bis 10,0 % reversibel blockiert sind, mit
B) mindestens einem organischen Polyamin in einem Äquivalenzverhältnis von Aminogruppen zu blockierten NCO-Gruppen von 2 : 1 bis 50 : 1.

Gegenstand der Erfindung ist auch das Verfahren zur Herstellung dieser harnstoffgruppenhaltigen, aminischen Härter-Gemische.

Ein weiterer Gegenstand der Erfindung ist die Verwendung dieser harnstoffgruppenhaltigen, aminischen Härter-Gemische in Kombination mit den in der Kunststoffund Beschichtungstechnologie üblichen Epoxidharzen, gegebenenfalls in Kombination mit den in der Kunststoff- und Beschichtungstechnologie üblichen Katalysatoren, Hilfs- und Zusatzstoffen zur Herstellung von Klebstoffen, Dichtungsmassen, Vergußmassen, Formteilen oder Beschichtungen.

Der Erfindung liegt die überraschende Beobachtung zugrunde, daß Reaktivsysteme auf der Basis der erfindungsgemäßen harnstoffgruppenhaltigen, aminischen Härter-Gemische und Epoxidharzen zu Kunststoffen aushärten, die dich durch eine Langzeitelastifizierung mit einem überraschend günstigen Verhältnis von Plastizität einerseits und Elastizität andererseits auszeichnen.

Ausgangsverbindung zur Herstellung des Teils A) der erfindungsgemäßen harnstoffgruppenhaltige, aminische Härter-Gemische sind organische Polyisocyanate, deren NCO-Gruppen zu mindestens 95 Mol-% durch Reaktion mit mindestens einem, phenolische OH-Gruppen aufweisenden Kohlenwasserstoffharz der nachstehend näher beschriebenen Art reversibel blockiert sind.

Geeignete Polyisocyanate zur Herstellung des erfindungswesentlichen Teils A) sind organische Polyisocyanate oder Polyisocyanatgemische mit einem (mittleren), aus Isocyanatgehalt und Funktionalität bestimmten Molekulargewicht von 168 bis 25000, vorzugsweise 1000 bis 12000. Geeignete Ausgangspolyisocyanate sind die aus der Polyurethanchemie an sich bekannten aliphatischen Isocyanate wie Hexamethylendiisocyanat, Isophorondiisocyanat, Dicyclohexylmethandiisocyanat, die isomeren Diphenylmethandiisocyanate sowie deren höheren Homologen wie sie durch Phosgenierung von Anilin/Formaldehyd-Kondensationsprodukten entstehen, aromatische Diisocyanate wie 2,4-, und 2,6-Toluylendiisocyanat sowie deren technische Gemische. Ebenfalls geeignet sind die an sich bekannten Folgeprodukte der genannten Isocyanate mit Biuret-, Isocyanurat-, Iminooxadiazindion-, Uretdion-, Allophanat und/oder Urethanstruktur.

Vorzugsweise handelt es sich bei den Polyisocyanaten zur Herstellung der Ausgangsverbindungen A) um Isocyanatgruppen aufweisende Prepolymere, wie sie in an sich bekannter Weise durch Umsetzung von nieder- oder höhermolekularen Polyhydroxylverbindungen mit überschüssigen Mengen der vorstehend genannten Di- oder Polyisocyanate oder auch mit einem großen Überschuß der genannten Di- und Polyisocyanate und anschliessende Entfernung des überschüssigen Polyisocyanates z.B. durch Dünnschichtdestillation erhalten werden können. Ganz besonders bevorzugt werden zur Synthese der Prepolymeren aromatische Polyisocyanate des Molekulargewichtsbereichs 174 bis 300 eingesetzt. Die Herstellung der Prepolymeren erfolgt im allgemeinen bei 40 bis 140°C, gegebenenfalls unter Mitverwendung von aus der Polyurethanchemie an sich bekannten Katalysatoren, wie beispielsweise metallorganischen Verbindungen wie Zinn(II)octoat, Dibutylzinn(II)diacetat, Dibutylzinn(II)dilaurat oder tertiären Aminen wie Triethylamin oder Diazabicyclooctan.

Zur Herstellung derartiger Prepolymere eignen sich niedermolekulare Polyhydroxylverbindungen des Molekulargewichtsbereichs 62 bis 299 wie beispielsweise Ethylenglykol, Propandiol-1,2, Propylenglykol-1,3, Butandiol-1,2, Butandiol-1,3, Butandiol-1,4, Pentandiol-1,2, Pentandiol-1,5, Hexandiol-1,6, Octandiol-1,8, Dodecandiol-1,12, Neopentylglykol, 2-Ethylhexandiol-1,3, Trimethylpentandiole, Butylethylpropandionl-1,3, Cyclohexandimethanole, Glyzerin, Trimethylolpropan, Pentaerythrit, niedermolekulare Hydroxylgruppen aufweisende Ester derartiger Polyole mit Dicarbonsäuren der nachstehend beispielhaft genannten Art oder niedermolekulare Ethoxylierungs- oder Propoxylierungsprodukte derartiger einfacher Polyole oder beliebige Gemische derartiger modifizierter oder nicht modifizierter Alkohole.

Vorzugsweise werden zur Herstellung der Prepolymeren höhermolekulare Polyhydroxylverbindungen des Molekulargewichtsbereichs 300 bis 20000, vorzugsweise 1000 bis 8000, der aus der Polyurethanchemie an sich bekannten Art eingesetzt. Höhermolekulare Polyhydroxylverbindungen zur Herstellung der Prepolymeren sind beispielsweise die den gemachten Angaben entsprechenden Polyesterpolyole auf Basis von niedermolekularen einfachen Alkoholen der bereits beispielhaft genannten Art und mehrbasischen Carbonsäuren wie beispielsweise Adipinsäure, Sebacinsäure, Phthalsäure, Isophthalsäure, Tetrahydrophthalsäure, Hexahydrophtalsäure, Maleinsäure, den Anhydriden derartiger Säuren oder beliebigen Gemischen derartiger Säuren bzw. Anhydriden. Auch die obigen Angaben entsprechenden Hydroxylgruppen-aufweisenden Polylactone, insbesondere Poly-ε-caprolactone sind zur Herstellung der Prepolymeren bzw. Semiprepolymeren geeignet.

Zur Herstellung der Isocyanatgruppen aufweisenden Prepolymeren besonders bevorzugt sind die den obigen Ausführungen entsprechenden Polyetherpolyole, wie sie in an sich bekannte Weise durch Alkoxylierung von geeigneten Startermolekülen zugänglich sind. Geeignete Startermoleküle sind beispielsweise die oben bereits genannten einfachen Polyole, Wasser, organische Polyamine mit mindestens zwei N-H-Bindungen oder beliebige Gemische derartiger Startermoleküle. Für die Alkoxylierungsreaktion geeignete Alkylenoxide sind insbesondere Ethylenoxid und/oder Propylenoxid, die in beliebiger Reihenfolge oder auch im Gemisch bei der Alkoxylierungsreaktion eingesetzt werden können.

Auch die den oben gemachten Angaben entsprechenden Polytetramethylenglykolpolyether, wie sie in bekannter Weise durch kationische Polymerisation von Tetrahydrofuran zugänglich sind, sind bevorzugt zur Herstellung der Prepolymeren geeignet.

Zur Herstellung der Prepolymeren ferner geeignet sind die den obigen Ausrührungen entsprechenden, Hydroxylgruppen-aufweisenden Polycarbonate, wie sie beispielsweise durch Umsetzung von einfachen Diolen der oben genannten Art mit Diarylcarbonaten, wie beispielsweise Diphenylcarbonat oder Phosgen hergestellt werden können.

Geeignet zur Herstellung der NCO-Gruppen aufweisenden Prepolymere sind ferner Polythioetherpolyole, wie sie zum Beispiel durch Polykondensation des Thiodiglykols mit sich selbst oder mit Diolen und/oder Polyolen der genannten Art erhalten werden können.

Ferner eignen sich Polyacetale, wie z.B. Polykondensationsprodukte aus Formaldehyd und Diolen bzw. Polyolen der genannten Art, wie sie unter Verwendung von sauren Katalysatoren wie Phosphorsäure oder p-Toluolsulfonsäure erhalten werden können.

Selbstverständlich können auch Gemische der beispielhaft genannten Hydroxylverbindungen zur Herstellung der Prepolymeren eingesetzt werden.

Besonders bevorzugte Polyisocyanate des Teils A) zur Herstellung der erfindungsgemäßen harnstoffgruppenhaltigen, aminischen Härter-Gemische sind Prepolymere auf Basis aromatischer Polyisocyanate und Polyetherpolyolen der vorstehend genannten Art.

Zur Herstellung der erfindungsgemäß als Teil A) eingesetzten blockierten Polyisocyanate geeignete phenolische OH-Gruppen aufweisende Kohlenwasserstoffharze sind solche der allgemein bekannten Art wie sie beispielhaft beschrieben werden in Ullmanns Encyklopädie der technischen Chemie, 4. Auflage, Bd. 12, Seite 539 bis 545, (Verlag Chemie, Weinheim 1976), Kirk-Othmer, Encyclopedia of Chemical Technology, 3. Auflage, Bd. 12, Seite 852 bis 869, (John Wiley & Sons, New York 1980) oder Encyclopedia of Polymer Science and Engineering, Bd. 7, Seite 758 bis 782, (John Wiley & Sons, New York 1987). Beispiele für geeignete phenolische OH-Gruppen aufweisende Kohlenwasserstoffharze sind Cumaron-Inden-Harze, Petroleumharze oder Terpenharze.

Derartige phenolische OH-Gruppen aufweisende Kohlenwasserstoffharze werden typischerweise hergestellt durch Copolymerisation von ungesättigten Kohlenwasserstoffen der nachstehend genannten Art mit Phenol in Gegenwart von starken Säuren oder Katalysatoren vom Friedel-Crafts-Typ. Geeignete ungesättigte Kohlenwasserstoffe zur Herstellung der erfindungsgemäß einsetzbaren OH-funktionellen Kohlenwasserstoffharze sind die bei der Crackung von Naphtha oder Gasöl anfallenden Kohlenwasserstoffe wie beispielsweise Buten, Butadien, Penten, Piperylen, Isopren, Cyclopentadien, Styrol, α-Methylstyrol, Vinyltoluol, Dicyclopentadien, Methyldicyclopentadien, Inden und Methylinden. Als ungesättigte Kohlenwasserstoffe, die zur Herstellung der erfindungsgemäß einsetzbaren OH-funktionellen Kohlenwasserstoffharze einsetzbar sind, eignen sich außerdem Terpenharze wie beispielsweise α-Pinen, β-Pinen, Dipenten, D-Limonen oder Terpentin. Die einsetzbaren Kohlenwasserstoffharze weisen einen Hydroxylgruppengehalt, berechnet als OH (Molekulargewicht = 17) von 0,1 % bis 10,0 % und bevorzugt einen Hydroxylgruppengehalt von 1,0 % bis 6,0 % auf. Besonders bevorzugt werden bei Raumtemperatur flüssige Kohlenwasserstoffharze mit einem Hydroxylgruppengehalt von 1,5 % bis 4,0 % zur Herstellung von Teil A) eingesetzt.

Die Herstellung der erfindungsgemäß als Teil A) geeigneten Polyisocyanate mit reversibel blockierten Isocyanatgruppen erfolgt durch Umsetzung von organischen Polyisocyanaten der vorstehend genannten Art bei Temperaturen von 40°C bis 150°C, vorzugsweise bei 50°C bis 100°C mit vorstehend näher charakterisierten phenolische OH-Gruppen aufweisenden Kohlenwasserstoffharzen. Die Menge des bei der Blockierungsreaktion eingesetzten, phenolische OH-Gruppen aufweisenden Kohlenwasserstoffharzes sollte zumindest 95 Mol-% der Menge der NCO-Gruppen entsprechen. Oftmals ist ein geringer Überschuß an Blockierungsmittel zweckmäßig, um eine vollständige Reaktion aller Isocyanatgruppen zu gewährleisten. In der Regel beträgt der Überschuß nicht mehr als 20 Mol-%, vorzugsweise nicht mehr als 15 Mol-% und besonders bevorzugt nicht mehr als 10 Mol-%, bezogen auf die Isocyanatgruppen.

Die Blockierungsreaktion wird vorzugsweise unter Mitverwendung von aus der Polyurethanchemie an sich bekannten Katalysatoren, wie beispielsweise metallorganischen Verbindungen wie Zinn(II)octoat, Dibutylzinn(II)diacetat, Dibutylzinn(II)dilaurat oder tertiären Aminen wie Triethylamin oder Diazabicyclooctan durchgeführt. Die Blockierungsreaktion kann gegebenenfalls in Anwesenheit inerter Lösungsmittel bzw. Lacklösungsmitteln wie beispielsweise Ethylacetat, Butylacetat, Methoxypropylacetat, Methylethylketon, Methylisobutylketon, Toluol, Xylol, aromatische oder (cyclo-)aliphatische Kohlenwasserstoffgemische oder beliebigen Gemischen derartiger Lösungsmittel durchgeführt werden. Bevorzugt werden diese Umsetzungen jedoch lösemittelfrei durchgeführt.

Bei Teil B) zur Herstellung der erfindungsgemäßen harnstoffgruppenhaltigen, aminischen Härter-Gemische handelt es sich ganz allgemein um Polyamine, die gegebenenfalls auch sekundäre Amingruppen aufweisen.

Bevorzugt werden Polyamine eingesetzt, die mindestens zwei primäre Aminogruppen pro Molekül aufweisen.

Besonders bevorzugt werden Polyamine eingesetzt, die mindestens zwei primäre Aminogruppen pro Molekül aufweisen und ein (mittleres) Molekulargewicht von 60 bis 500 besitzen. Geeignet sind beispielsweise Ethylendiamin, 1,2- und 1,3-Diaminopropan, 1,4-Diaminobutan, 1,6-Diaminohexan, 2,2,4- und/oder 2,4,4-Trimethylhexamethylendiamin, die isomeren Xylylendiamine, 1,4-Diaminocyclohexan, 4,4'-Diaminodicyclohexylmethan, 1,3-Diaminocyclopentan, 4,4'-Diaminodicyclohexylsulfon, 4,4'-Diaminodicyclohexylpropan-1,3, 4,4'-Diaminodicyclohexylpropan-2,2, 3,3'-Dimethyl-4,4'-diaminodicyclohexylmethan, 3-Aminomethyl-3,3,5-trimethylcyclohexylamin (Isophorondiamin), 3(4)-Aminomethyl-1-methylcyclohexylamin oder technisches Bisaminomethyltricyclodecan, wie es unter der Bezeichnung TCD-Diamin® von der Firma Hoechst AG vertrieben wurde oder auch solche Polyamine, die neben mindestens zwei primären Aminogruppen noch sekundäre Aminogruppen aufweisen wie beispielsweise Diethylentriamin oder Triethylentetramin.

Ganz besonders bevorzugt werden die Polyamine, insbesondere Diamine des genannten Molekulargewichtsbereichs eingesetzt, die einen oder mehrere cycloaliphatische Ringe aufweisen. Hierzu gehören beispielsweise 1,4-Diaminocyclohexan, 4,4'-Diaminodicyclohexylmethan, 1,3-Diaminocyclopentan, 4,4'-Diaminodicyclohexylsulfon, 4,4'-Diaminodicyclohexylpropan-1,3, 4,4'-Diaminodicyclohexylpropan-2,2, 3,3'-Dimethyl-4,4'-diaminodicyclohexylmethan, 3-Aminomethyl-3,3,5-trimethylcyclohexylamin (Isophorondiamin), 3(4)-Aminomethyl-1-methylcyclohexylamin oder technisches Bisaminomethyltricyclodecan.

Ebenfalls einsetzbar als Teil B) sind Addukte, die durch Umsetzung eines Überschusses der genannten Polyamine mit Epoxidharzen der nachstehend genannten Art hergestellt werden.

Weiterhin einsetzbar als Teil B) sind Polyetheramine, die durch Umsetzung von Polyetherpolyolen mit Ammoniak hergestellt werden und beispielsweise von der Fa. Huntsman unter dem Handelsnamen Jeffamin® vertrieben werden.

Desweiteren sind auch Polyamidharze als Teil B) geeignet. Derartige Polyamidharze, zu denen die Polyaminoamide und die Polyaminoimidazoline gehören, werden u.a. von Henkel unter dem Handelsnamen "Nersamid®" vertrieben.

Selbstverständlich ist es auch möglich Gemische der genannten Polyamine als Teil B) einzusetzen.

Die Herstellung der erfindungsgemäßen harnstoffgruppenhaltigen, aminischen Härter-Gemische erfolgt durch die Umsetzung der Komponente (A) mit der Komponente (B) bei Temperaturen bis 200°C, bevorzugt bei Temperaturen von 10°C bis 200°C, besonders bevorzugt bei Temperaturen von 40°C bis 150°C und ganz besonders bevorzugt bei Temperaturen von 50°C bis 100°C.

Die Reaktion kann gegebenenfalls katalysiert werden. Als Katalysatoren eignen sich vorzugsweise Verbindungen, die basische Stickstoffatome aufweisen. Genannt seien beispielsweise tertiäre Amine, Mannichbasen und Amidine.

Zur Herstellung der erfindungsgemäßen harnstoffgruppenhaltigen, aminischen Härter-Gemische werden Teil A) und Teil B) in solchen Mengen zugesetzt, daß das Äquivalentverhältnis von Aminogruppen zu blockierten Isocyanatgruppen 2:1 bis 50:1, bevorzugt 3,5:1 bis 25:1 und besonders bevorzugt 5:1 bis 15:1 beträgt.

Die Herstellung der erfindungsgemäßen harnstoffgruppenhaltigen, aminischen Härter-Gemische kann erforderlichenfalls in üblichen Lacklösemitteln der zuvor genannten Art durchgeführt werden. Bevorzugt wird die Herstellung jedoch lösemittelfrei durchgeführt.

Die Herstellung der erfindungsgemäßen harnstoffgruppenhaltigen, aminischen Härter-Gemische kann zum einen getrennt von der Synthese von A), vorzugsweise allerdings unmittelbar im Anschluß an die Synthese von Teil A) im selben Reaktor durchgeführt werden.

Die erfindungsgemäßen Härter-Gemische stellen flüssige Verbindungen mit einem H-Äquivalent von 20 bis 10.000, bevorzugt 40 bis 3.000 und besonders bevorzugt 50 bis 500 dar. Sie eignen sich bevorzugt als Härter in Kombination mit den in der Kunststoff- und Beschichtungstechnologie üblichen Epoxidharzen, gegebenenfalls in Kombination mit den in der Kunststoff- und Beschichtungstechnologie üblichen Katalysatoren, Hilfs- und Zusatzstoffen zur Herstellung von Beschichtungen, Klebstoffen, Dichtungsmassen, Vergußmassen oder Formteilen.

Die in der Kunststoff- und Beschichtungstechnologie üblichen Epoxidharze sind Oxirangruppen-aufweisende Verbindungen, die im Durchschnitt mehr als eine Epoxidgruppe pro Molekül enthalten. Beispiele für geeignete Epoxidharze sind Glycidylether von mehrwertigen Alkoholen wie z.B. Butandiol, Hexandiol, Glyzerin, TMP, hydriertem Diphenylolpropan oder mehrwertigen Phenolen wie z.B. Resorcin, Diphenylolpropan-2,2 (Bisphenol A), Diphenylolmethan (Bisphenol F) oder Phenol-Aldehyd-Kondensaten. Es können auch Glycidylester mehrwertiger Carbonsäuren, wie Hexahydrophthalsäure oder dimerisierte Fettsäure verwendet werden.

Besonders bevorzugt ist der Einsatz von flüssigen Epoxidharzen auf Basis von Epichlorhydrin und Diphenylolpropan-2,2 (Bisphenol A) oder Diphenylolmethan (Bisphenol F) bzw. deren Mischungen. Gewünschtenfalls kann mit monofunktionellen Epoxidverbindungen die Viskosität der Mischungen gesenkt werden und dadurch die Verarbeitung verbessert werden. Beispiele hierfür sind aliphatische und aromatische Glycidylether wie Butylglycidylether, Phenylglycidylether oder Glycidylester wie Versaticsäureglycidylester oder Epoxide wie Styroloxid oder 1,2-Epoxidodecan.

In den erfindungsgemäßen harnstoffgruppenhaltigen, aminischen Härter-Gemischen liegt das H-Äquivalent des Härters und das Oxirangruppen-Äquivalent des Epoxidharzes bevorzugt in einem Verhältnis von 0,8:1 bis 1,4:1, besonders bevorzugt in einem Verhältnis von 0,9:1 bis 1,2:1 und ganz besonders bevorzugt in einem Verhältnis von 0,95:1 bis 1,1:1 vor.

Zur Herstellung von Beschichtungen, Klebstoffen, Dichtungsmassen, Vergußmassen oder Formteilen können der Mischung aus harnstoffgruppenhaltigem, aminischem Härter-Gemisch und Epoxidharz gegebenenfalls die in der Kunststoff- und Beschichtungstechnologie üblichen Hilfs- und Zusatzmittel, wie beispielsweise Füllstoffe, Lösungsmittel, Verlaufshilfsmittel, Pigmente, Reaktionsbeschleuniger oder Viskositätsregulatoren, einverleibt werden. Beispielhaft genannt seien Reaktionsbeschleuniger wie Salicylsäure, Bis(dimethylaminomethyl)-phenol oder Tris-(dimethylaminomethyl)-phenol, Füllstoffe wie Sande, Gesteinsmehl, Kieselsäure, Asbestmehl, Kaolin, Talkum, Metallpulver, Teer, Teerpech, Asphalte, Korkschrote, Polyamide, Weichmacher wie beispielsweise Phthalsäureester oder andere Viskositätsregulatoren wie beispielsweise Benzylalkohol.

Ausgehärtete Kunststoffe auf der Basis der erfindungsgemäßen harnstoffgruppenhaltigen, aminischen Härter-Gemische und Epoxidharzen zeichnen sich gegenüber dem Stand der Technik durch eine Langzeitelastifizierung mit einem überraschend günstigen Verhältnis zwischen Plastizität einerseits und Elastizität andererseits aus.

Die auf der Basis der erfindungsgemäßen harnstoffgruppenhaltigen, aminischen Härter-Gemische und Epoxidharzen hergestellten Beschichtungen, Klebstoffe, Dichtungsmasse, Vergußmassen oder Formteile sind besonders gut für alle Anwendungsgebiete geeignet, wo gute Haftung, Chemikalienfestigkeit, sowie hohe Schlag- und Stoßfestigkeit, verbunden mit guter Flexibilität und Elastizität über einen langen Zeitraum gefordert werden.

Besonders gut geeignet sind die erfindungsgemäßen Systeme als Korrosionsschutzbeschichtungen. Insbesondere bei Belastung mit aggressiven Medien, wie beispielsweise bei der Ballasttank-Beschichtung, zeichnen sich die Systeme durch eine gute Naßhaftung und eine gute Haftung unter Kothodenschutzbedingungen aus.

Je nach Anforderungsprofil können die Eigenschaften des harnstoffgruppenhaltigen, aminischen Härter-Gemisches eingestellt werden. Werden besonders weiche und elastische Materialien gefordert, wird das erfindungsgemäße harnstoffgruppenhaltige, aminische Härter-Gemisch aus einer großen Menge an Teil A) und einem geringen Anteil an Teil B) hergestellt. Werden hoch vernetzte, chemikalienbeständige Materialien gefordert, so wird das erfindungsgemäße harnstoffgruppenhaltige, aminische Härter-Gemisch aus einer geringen Menge an Teil A) und einem großen Anteil an Teil B) synthetisiert.

### Beispiele

Alle Prozentangaben beziehen sich, soweit nicht anders vermerkt, auf das Gewicht. Die Langzeitbelastung wurde durch eine 18 h -Temperung bei 100°C simuliert.

Die Viskositätsmessungen wurden mit einem Kegel-Platte-Viskosimeter der Firma PHYSICA, Typ SM/KP/LC, durchgeführt.

### I Herstellung des erfindungsgemäßen Teil A

### Beispiel 1

381,3 g eines Polyetherpolyols mit der Funktionalität 2,6 und der OH-Zahl 43, hergestellt durch gleichzeitige Ethoxylierung und Propoxylierung (EO/PO-Verhältnis = 2:8) eines 2:1 Gemisches von Propylenglykol und Glycerin, und 845,6 g eines Polyetherdiols mit der OH-Zahl 29, hergestellt durch Propoxylierung von Propylenglykol und anschließender Ethoxylierung (EO/PO-Verhältnis = 2:8), werden nach Zusatz von 0,07 g 2-Chlorpropionsäure mit 126,8 g 2,4-Diisocyanatotoluol bei 60-65°C prepolymerisiert bis der theoretische NCO-Gehalt von 2,3 % erreicht ist.

Anschließend setzt man 645,9 g eines handelsüblichen Kohlenwasserstoffharzes mit einem OH-Gehalt von 1,8 % (Necirès EPX L2, Handelsprodukt der Fa. Nevcin Polymers B. V., Uithoorn, Holland) zu, katalysiert mit 0,4 g Zinn(II)octoat und rührt bei 70 - 80°C bis der NCO-Gehalt unter 0,2 % liegt.

Blockierter NCO-Gehalt: 1,5 %
Viskosität (23°C): 24400 mPas

### Beispiel 2

425,0 g eines Polyesterdiols mit der OH-Zahl 66, hergestellt durch Veresterung von Hexandiol-1,6 und Neopentylglykol im Molverhältnis 1:1 mit Adipinsäure, 500,0 g eines Polyetherdiols mit der OH-Zahl 56, hergestellt durch gemischte Propoxylierung und Ethoxylierung von Propylenglykol (PO/EO-Verhältnis = 50:50), und 4,5 g Trimethylolpropan werden nach Zusatz von 0,06 g 2-Chlorpropionsäure mit 174,0 g 2,4-Diisocyanatotoluol bei 60 - 65°C prepolymerisiert bis der theoretische NCO-Gehalt von 3,4 % erreicht ist.

Dann setzt man 741,2 g eines handelsüblichen KW-Harzes mit einem OH-Gehalt von 1,9 % (Novares LA 300, Handelsprodukt der Fa. VFT AG, Duisburg) zu, katalysiert mit 0,37 g Zinn(II)octoat und rührt bei 70 - 80°C bis der NCO-Gehalt unter 0,2 % liegt.

Blockierter NCO-Gehalt: 1,8 %
Viskosität (23°C): 119000 mPas

### II Herstellung des erfindungsgemäßen harnstoffgruppenhaltigen, aminischen Härter-Gemisches

### Beispiel 3

169,4 g des blockierten Polyisocyanates aus Beispiel 1 und 130,6 g Isophorondiamin werden 4 h bei 80°C gerührt.

Viskosität (23°C): 1650 mPas

### Beispiel 4

183,0 g des blockierten Polyisocyanates aus Beispiel 1 und 117,0 g eines handelsüblichen Polyamin-Addukt-Härters auf Basis Isophorondiamin/Epoxidharz mit einem Aminwert von 6,5 Eq/kg (Härter HY 847®, Handelsprodukt der Fa. Ciba Specialty Chemicals) werden 4 h bei 80°C gerührt.

Viskosität (23°C): 12700 mPas

### Beispiel 5

161,2 g des blockierten Polyisocyanates aus Beispiel 1 und 138,8 g eines handelsüblichen Polyaminoamid-Härters mit der H-aktiv-Äquivalentmasse von ca. 95 (Euredur® 250, Handelsprodukt der Fa. Ciba Specialty Chemicals) werden 4 h bei 80°C gerührt.

Viskosität (23°C): 9800 mPas

### Beispiel 6

168,8 g des blockierten Polyisocyanates aus Beispiel 2 und 131,2 g Isophorondiamin werden 4 h bei 80°C gerührt.

Viskosität (23°C): 3310 mPas

### Beispiel 7

181,0 g des blockierten Polyisocyanates aus Beispiel 2 und 119,0 g eines handelsüblichen Polyamin-Addukt-Härters auf Basis Isophorondiamin/Epoxidharz mit einem Aminwert von 6,5 Eq/kg (Härter HY®, Handelsprodukt der Fa. Ciba Specialty Chemicals) werden 4 h bei 80°C gerührt.

Viskosität (23°C): 21400 mPas

### Beispiel 8

160,6 g des blockierten Polyisocyanates aus Beispiel 2 und 139,4 g eines handelsüblichen Polyaminoamid-Härters mit der H-aktiv-Äquivalentmasse von ca. 95 (Euredur® 250, Handelsprodukt der Fa. Ciba Specialty Chemicals) werden 4 h bei 80°C gerührt.

Viskosität (23°C): 17300 mPas

### Beispiel 9

190,6 g eines Polyetherpolyols mit der Funktionalität 2,6 und der OH-Zahl 43, hergestellt durch gleichzeitige Ethoxylierung und Propoxylierung (EO/PO-Verhältnis = 2:8) eines 2:1 Gemisches von Propylenglykol und Glycerin, und 422,8 g eines Polyetherdiols mit der OH-Zahl 29, hergestellt durch Propoxylierung von Propylenglykol und anschließender Ethoxylierung (EO/PO-Verhältnis = 2:8), werden nach Zusatz von 0,03 g 2-Chlorpropionsäure mit 63,4 g 2,4-Diisocyanato-toluol bei 60 - 65°C prepolymerisiert bis der theoretische NCO-Gehalt von 2,3 % erreicht ist.

Anschließend setzt man 322,9 g eines handelsüblichen Kohlenwasserstoffharzes mit einem OH-Gehalt von 1,8 % (Necirès® EPX L2, Handelsprodukt der Fa. Nevcin Polymers B. V., Uithoorn, Holland) zu, katalysiert mit 0,2 g Zinn(II)octoat und rührt bei 70 - 80°C bis der NCO-Gehalt unter 0,2 % liegt.

Dann setzt man 770,6 g Isophorondiamin zu und rührt 4 h bei 80°C.

Viskosität (23°C): 1520 mPas

### III Anwendungsbeispiele

### Verwendung der harnstoffgruppenhaltigen, aminischen Härter-Gemische in Kombination mit einem in der Kunststoff- und Beschichtungstechnologie üblichen Epoxidharz

### Beispiel 10

35,4 g des Adduktes aus Beispiel 3 werden mit 30,0 g eines Standard-Epoxidharzes (Epikote® 828, Handelsprodukt der Fa. Shell, Epoxidäquivalentgewicht 190) innig vermischt. Die Mischung wird in einer Schichtdicke von 0,1 mm auf eine Metallplatte aufgebracht. Die Aushärtung erfolgt bei Raumtemperatur.

Die Verarbeitungszeit (Verdoppelung der Anfangsviskosität) beträgt 25 Minuten.

| | |
|---|---|
| Anfangsviskosität (23°C) | 13.200 mPa·s |
| Erichsen-Tiefung nach 14 d Raumtemperaturlagerung (DIN ISO 1520) | > 9,0 mm |
| Erichsen-Tiefung nach 18 h Temperung bei 100°C (DIN ISO 1520) | 7,5 mm |

### Beispiel 11

33,0 g des Adduktes aus Beispiel 4 werden mit 30,0 g eines Standard-Epoxidharzes (Epikote® 828, Handelsprodukt der Fa. Shell, Epoxidäquivalentgewicht 190) innig vermischt. Die Mischung wird in einer Schichtdicke von 0,1 mm auf eine Metallplatte aufgebracht. Die Aushärtung erfolgt bei Raumtemperatur.

Die Verarbeitungszeit (Verdoppelung der Anfangsviskosität) beträgt 25 Minuten.

| | |
|---|---|
| Anfangsviskosität (23°C) | 14.300 mPa·s |
| Erichsen-Tiefung nach 14 d Raumtemperaturlagerung (DIN ISO 1520) | > 9,0 mm |
| Erichsen-Tiefung nach 18 h Temperung bei 100°C (DIN ISO 1520) | 9,0 mm |

### Beispiel 12

37,2 g des Adduktes aus Beispiel 5 werden mit 30,0 g eines Standard-Epoxidharzes (Epikote® 828, Handelsprodukt der Fa. Shell, Epoxidäquivalentgewicht 190) innig vermischt. Die Mischung wird in einer Schichtdicke von 0,1 mm auf eine Metallplatte aufgebracht. Die Aushärtung erfolgt bei Raumtemperatur.

Die Verarbeitungszeit (Verdoppelung der Anfangsviskosität) beträgt 30 Minuten.

| | |
|---|---|
| Anfangsviskosität (23°C) | 9.700 mPa·s |
| Erichsen-Tiefung nach 14 d Raumtemperaturlagerung (DIN ISO 1520) | > 9,0 mm |
| Erichsen-Tiefung nach 18 h Temperung bei 100°C (DIN ISO 1520) | > 9,0 mm |

### Beispiel 13

35,5 g des Adduktes aus Beispiel 6 werden mit 30,0 g eines Standard-Epoxidharzes (Epikote® 828, Handelsprodukt der Fa. Shell, Epoxidäquivalentgewicht 190) innig vermischt. Die Mischung wird in einer Schichtdicke von 0,1 mm auf eine Metallplatte aufgebracht. Die Aushärtung erfolgt bei Raumtemperatur.

Die Verarbeitungszeit (Verdoppelung der Anfangsviskosität) beträgt 15 Minuten.

| | |
|---|---|
| Anfangsviskosität (23°C) | 27.400 mPa·s |
| Erichsen-Tiefung nach 14 d Raumtemperaturlagerung (DIN ISO 1520) | > 9,0 mm |
| Erichsen-Tiefung nach 18 h Temperung bei 100°C (DIN ISO 1520) | 7,5 mm |

### Beispiel 14

33,2 g des Adduktes aus Beispiel 7 werden mit 30,0 g eines Standard-Epoxidharzes (Epikote® 828, Handelsprodukt der Fa. Shell, Epoxidäquivalentgewicht 190) innig vermischt. Die Mischung wird in einer Schichtdicke von 0,1 mm auf eine Metallplatte aufgebracht. Die Aushärtung erfolgt bei Raumtemperatur.

Die Verarbeitungszeit (Verdoppelung der Anfangsviskosität) beträgt 20 Minuten.

| | |
|---|---|
| Anfangsviskosität (23°C) | 19.800 mPa·s |
| Erichsen-Tiefung nach 14 d Raumtemperaturlagerung (DIN ISO 1520) | > 9,0 mm |
| Erichsen-Tiefung nach 18 h Temperung bei 100°C (DIN ISO 1520) | > 8,5 mm |

### Beispiel 15

37,4 g des Adduktes aus Beispiel 8 werden mit 30,0 g eines Standard-Epoxidharzes (Epikote® 828, Handelsprodukt der Fa. Shell, Epoxidäquivalentgewicht 190) innig vermischt. Die Mischung wird in einer Schichtdicke von 0,1 mm auf eine Metallplatte aufgebracht. Die Aushärtung erfolgt bei Raumtemperatur.

Die Verarbeitungszeit (Verdoppelung der Anfangsviskosität) beträgt 35 Minuten.

| | |
|---|---|
| Anfangsviskosität (23°C) | 13.400 mPa·s |
| Erichsen-Tiefung nach 14 d Raumtemperaturlagerung (DIN ISO 1520) | > 9,0 mm |
| Erichsen-Tiefung nach 18 h Temperung bei 100°C (DEN ISO 1520) | > 9,0 mm |

### Beispiel 16

35,4 g des Adduktes aus Beispiel 9 werden mit 30,0 g eines Standard-Epoxidharzes (Epikote® 828, Handelsprodukt der Fa. Shell, Epoxidäquivalentgewicht 190) innig vermischt. Die Mischung wird in einer Schichtdicke von 0,1 mm auf eine Metallplatte aufgebracht. Die Aushärtung erfolgt bei Raumtemperatur.

Die Verarbeitungszeit (Verdoppelung der Anfangsviskosität) beträgt 25 Minuten.

| | |
|---|---|
| Anfangsviskosität (23°C) | 13.000 mPa·s |
| Erichsen-Tiefung nach 14 d Raumtemperaturlagerung (DIN ISO 1520) | > 9,0 mm |
| Erichsen-Tiefung nach 18 h Temperung bei 100°C (DIN ISO 1520) | 7,5 mm |

### IV Nicht erfindungsgemäße Beispiele als Vergleich

### Beispiel 17

946,6 g eines Polyetherpolyols mit der Funktionalität 2,6 und der OH-Zahl 43, hergestellt durch gleichzeitige Ethoxylierung und Propoxylierung (EO/PO-Verhältnis = 2:8) eines 2:1 Gemisches von Propylenglykol und Glycerin, werden nach Zusatz von 0,04 g 2-Chlorpropionsäure mit 125,9 g 2,4-Diisocyanatotoluol 5 Stunden bei 80°C prepolymerisiert bis der theoretische NCO-Gehalt von 2,8 % erreicht ist.

Anschließend setzt man 177,3 g eines technischen Nonylphenol-Isomerengemisches zu. Nach Katalyse mit 0,14 g Zinn(II)octoat wird 10 Stunden bei 60°C nachgerührt bis der NCO-Gehalt unter 0,2 % liegt.

Blockierter NCO-Gehalt: 2,45 %
Viskosität (23°C): 106000 mPa·s

214,8 g des blockierten Polyisocyanates und 85,2 g Isophorondiamin werden 4 h bei 80°C gerührt.

Viskosität (23°C): 87000 mPa·s

27,9 g des Adduktes werden mit 30,0 g eines Standard-Epoxidharzes (Epikote® 828, Handelsprodukt der Fa. Shell, Epoxydäquivalentgewicht 190) innig vermischt. Die Mischung wird in einer Schichtdicke von 0,1 mm auf eine Metallplatte aufgebracht. Die Aushärtung erfolgt bei Raumtemperatur.

Die Verarbeitunszeit (Verdoppelung der Anfangsviskosität) beträgt 15 Minuten.

| | |
|---|---|
| Anfangsviskosität (23°C) | 60.600 mPa·s |
| Erichsen-Tiefung nach 14 d Raumtemperaturlagerung (DIN ISO 1520) | > 9,0 mm |
| Erichsen-Tiefung nach 18 h Temperung bei 100°C (DIN ISO 1520) | 5,5 mm |

### Beispiel 18

28,8 g des epoxydgruppenhaltigen Harzes Rütapox VE 3318 und 15,6 g des amingruppenhaltigen Härters Rütadur® H 550 (beides Produkte der Bakelite AG) werden mit 12,0 g des Kohlenwasserstoffharzes Novares® LA 700 mit einem Hydroxylgruppengehalt von 2,25 % (Handelsprodukt der Fa. VFT AG, Duisburg) innig vermischt. Die Mischung wird in einer Schichtdicke von 0,1 mm auf eine Metallplatte aufgebracht. Die Aushärtung erfolgt bei Raumtemperatur. Die Verarbeitunszeit (Verdoppelung der Anfangsviskosität) beträgt 15 Minuten.

| | |
|---|---|
| Anfangsviskosität (23°C) | 769 mPa·s |
| Erichsen-Tiefung nach 14 d Raumtemperaturlagerung (DIN ISO 1520) | > 9,0 mm |
| Erichsen-Tiefung nach 18 h Temperung bei 100°C (DIN ISO 1520) | 3,0 mm |

## Patentansprüche

1. Harnstoffgruppenhaltige, aminische Härter-Gemische für Epoxidharze, hergestellt durch die Umsetzung von
A) einer Polyisocyanatkomponente, bestehend aus mindestens einem organischen Polyisocyanat, dessen NCO-Gruppen zu mindestens 95 Mol-% durch Reaktion mit mindestens einem, phenolische OH-Gruppen aufweisenden Kohlenwasserstoffharz mit einem Hydroxylgruppengehalt, berechnet als OH, Molekulargewicht = 17, von 0,1 % bis 10,0 %, reversibel blockiert sind, mit
B) mindestens einem organischen Polyamin in einem Äquivalenzverhältnis von Aminogruppen zu blockierten NCO-Gruppen von 2 : 1 bis 50 : 1.

2. Harnstoffgruppenhaltige, aminische Härter-Gemische gemäß Anspruch 1, **dadurch gekennzeichnet, daß** der zur Herstellung eingesetzte Teil A) aus mindestens einem Isocyanatgruppen aufweisenden Prepolymeren auf Basis von (i) aromatischen Polyisocyanaten des Molekulargewichtsbereichs 174 bis 300 und (ii) Ether- und/oder Estergruppen aufweisenden organischen Polyhydroxylverbindungen des Molekulargewichtsbereichs 1000 bis 8000 besteht, dessen Isocyanatgruppen durch Reaktion mit mindestens einem, phenolische OH-Gruppen aufweisenden Kohlenwasserstoffharz mit einem Hydroxylgruppengehalt, berechnet als OH, Molekulargewicht = 17, von 0,1 % bis 10,0 %, reversibel blockiert sind.

3. Harnstoffgruppenhaltige, aminische Härter-Gemische gemäß Anspruch 1, **dadurch gekennzeichnet, daß** die Isocyanatgruppen des zur Synthese eingesetzten Teils A) durch Reaktion mit einem bei Raumtemperatur flüssigen, phenolische OH-Gruppen aufweisenden Kohlenwasserstoffharz aus der Gruppe der Cumaron-Inden-Harze, Petroleumharze oder Terpenharze mit einem Hydroxylgruppengehalt, berechnet als OH, Molekulargewicht = 17, von 1,5 % bis 4,0 % reversibel blockiert sind.

4. Harnstoffgruppenhaltige, aminische Härter-Gemische gemäß Anspruch 1, **dadurch gekennzeichnet, daß** es sich bei dem zur Synthese eingesetzten Teil B) um mindestens ein Diamin mit mindestens einem cycloaliphatischen Ring mit einem maximalen Molekulargewicht von 500 handelt.

5. Verfahren zur Herstellung der erfindungsgemäßen harnstoffgruppenhaltigen, aminischen Härter-Gemische gemäß Anspruch 1 durch die Umsetzung der Teile A) und B) bei Temperaturen bis 200 °C.

6. Verfahren zur Herstellung des erfindungsgemäßen harnstoffgruppenhaltigen, aminischen Härter-Gemisches gemäß Anspruch 1, **dadurch gekennzeichnet, daß** die Umsetzung bei Temperaturen von 50 bis 100°C durchgeführt wird.

7. Verwendung der harnstoffgruppenhaltigen, aminischen Härter-Gemische gemäß Anspruch 1 in Kombination mit den in der Kunststoff- und Beschichtungstechnologie üblichen Epoxidharzen, gegebenenfalls in Kombination mit den in der Kunststoff- und Beschichtungstechnologie üblichen Katalysatoren, Hilfs- und Zusatzstoffen zur Herstellung von Beschichtungen, Klebstoffen, Dichtungsmassen, Vergußmassen oder Formteilen.

8. Verwendung der harnstoffgruppenhaltigen, aminischen Härter-Gemische gemäß Anspruch 1 in Kombination mit den in der Kunststoff- und Beschichtungstechnologie üblichen Epoxidharzen, gegebenenfalls in Kombination mit den in der Kunststoff- und Beschichtungstechnologie üblichen Katalysatoren, Hilfs- und Zusatzstoffen, für Korrosionsschutzbeschichtungen.

9. Verwendung der harnstoffgruppenhaltigen, aminischen Härter-Gemische gemäß Anspruch 1 in Kombination mit den in der Kunststoff- und Beschichtungstechnologie üblichen Epoxidharzen, gegebenenfalls in Kombination mit den in der Kunststoff- und Beschichtungstechnologie üblichen Katalysatoren, Hilfs- und Zusatzstoffen, für Ballasttankbeschichtungen.

## Claims

1. Amine-type hardener mixtures for epoxy resins, containing urea groups and prepared by reacting
A) a polyisocyanate component composed of at least one organic polyisocyanate at least 95 mol% of whose NCO groups have been reversibly blocked by reaction with at least one hydrocarbon resin which contains phenolic OH groups and has a hydroxyl group content, calculated as OH, molecular weight = 17, of from 0.1% to 10.0%, with
B) at least one organic polyamine in an equivalents ratio of amino groups to blocked NCO groups of from 2:1 to 50:1.

2. Amine-type hardener mixtures containing urea groups, according to Claim 1, **characterized in that** the portion A) used for the preparation is composed of at least one isocyanato-containing prepolymer based on (i) aromatic polyisocyanates of the molecular weight range 174 to 300 and (ii) organic polyhydroxyl compounds, containing ether and/or ester groups, of the molecular weight range 1,000 to 8,000, whose isocyanate groups have been reversibly blocked by reaction with at least one hydrocarbon resin containing phenolic OH groups and having a hydroxyl group content, calculated as OH, molecular weight = 17, of from 0.1% to 10.0%.

3. Amine-type hardener mixtures containing urea groups, according to Claim 1, **characterized in that** the isocyanate groups of the portion A) used for the synthesis have been reversibly blocked by reaction with a hydrocarbon resin which is liquid at room temperature, contains phenolic OH groups, and is from the group of the coumarone-indene resins, petroleum resins or terpene resins, having a hydroxyl group content, calculated as OH, molecular weight = 17, of from 1.5% to 4.0%.

4. Amine-type hardener mixtures containing urea groups, according to Claim 1, **characterized in that** the portion B) used for the synthesis comprises at least one diamine having at least one cycloaliphatic ring with a maximum molecular weight of 500.

5. Process for preparing the amine-type hardener mixtures containing urea groups, according to Claim 1, by reacting portions A) and B) at temperatures up to 200°C.

6. Process for preparing the amine-type hardener mixture containing urea groups, according to Claim 1, **characterized in that** the reaction is conducted at temperatures from 50 to 100°C.

7. Use of the amine-type hardener mixtures containing urea groups, according to Claim 1, in combination with the epoxy resins customary in polymer and coating technology, optionally in combination with additives, auxiliaries and catalysts customary in polymer and coating technology, to produce coatings, adhesives, sealants, casting compounds or mouldings.

8. Use of the amine-type hardener mixtures containing urea groups, according to Claim 1, in combination with the epoxy resins customary in polymer and coating technology, optionally in combination with additives, auxiliaries and catalysts customary in polymer and coating technology, for anti-corrosion coatings.

9. Use of the amine-type hardener mixtures containing urea groups, according to Claim 1, in combination with the epoxy resins customary in polymer and coating technology, optionally in combination with additives, auxiliaries and catalysts customary in polymer and coating technology, for ballast tank coatings.

## Revendications

1. Mélange aminé durcisseur pour résine époxyde, contenant des radicaux urée, préparé par réaction de
A) un composant polyisocyanate, consistant en au moins un polyisocyanate organique dont les radicaux NCO sont bloqués pour au moins 95% en moles, de manière réversible, par réaction avec au moins une résine hydrocarbure présentant des radicaux OH phénoliques avec une teneur en radicaux hydroxyle, calculée comme OH, poids moléculaire = 17, allant de 0,1% à 10,0%, avec
B) au moins une polyamine organique en un rapport des équivalents des radicaux amino aux radicaux NCO bloqués allant de 2:1 à 50:1.

2. Mélange aminé durcisseur contenant des radicaux urée, suivant la revendication 1, **caractérisé en ce que** la partie A) mise en oeuvre pour la préparation consiste en au moins un prépolymère présentant des radicaux isocyanate, à base de (i) des polyisocyanates aromatiques d'intervalle de poids moléculaire allant de 174 à 300 et (ii) des composés polyhydroxylés organiques présentant des radicaux éther et/ou ester, d'intervalle de poids moléculaire allant de 1000 à 8000, dont les radicaux isocyanate sont bloqués de manière réversible par réaction avec au moins une résine hydrocarbure présentant des radicaux OH phénoliques avec une teneur en radicaux hydroxyle, calculée comme OH, poids moléculaire = 17, allant de 0,1% à 10,0%.

3. Mélange aminé durcisseur contenant des radicaux urée, suivant la revendication 1, **caractérisé en ce que** les radicaux isocyanate de la partie A) mise en oeuvre pour la synthèse sont bloqués de manière réversible, par réaction avec une résine hydrocarbure présentant des radicaux OH phénoliques, liquide à la température ambiante, choisie parmi le groupe des résines coumarone-indène, des résines du pétrole ou des résines de terpène avec une teneur en radicaux hydroxyle, calculée comme OH, poids moléculaire = 17, allant de 1,5% à 4,0%.

4. Mélange aminé durcisseur contenant des radicaux urée, suivant la revendication 1, **caractérisé en ce que** la partie B) mise en oeuvre pour la synthèse consiste en au moins une diamine avec au moins un cycle cycloaliphatique avec un poids moléculaire maximal de 500.

5. Procédé de préparation du mélange aminé durcisseur contenant des radicaux urée suivant l'invention, suivant la revendication 1, par réaction des parties A) et B) à des températures de jusqu'à 200°C.

6. Procédé de préparation du mélange aminé durcisseur contenant des radicaux urée suivant l'invention, suivant la revendication 1, **caractérisé en ce que** la réaction est réalisée à des températures allant de 50 à 100°C.

7. Utilisation du mélange aminé durcisseur contenant des radicaux urée suivant la revendication 1, en combinaison avec les résines époxydes usuelles de la technologie des matières plastiques et des revêtements, le cas échéant en combinaison avec les catalyseurs, additifs et auxiliaires usuels de la technologie des matières plastiques et des revêtements, pour la préparation de revêtements, colles, matériaux d'étanchéité, masses de remplissage ou articles moulés.

8. Utilisation du mélange aminé durcisseur contenant des radicaux urée suivant la revendication 1, en combinaison avec les résines époxydes usuelles de la technologie des matières plastiques et des revêtements, le cas échéant en combinaison avec les catalyseurs, additifs et auxiliaires usuels de la technologie des matières plastiques et des revêtements, pour des revêtements de protection contre la corrosion.

9. Utilisation du mélange aminé durcisseur contenant des radicaux urée suivant la revendication 1, en combinaison avec les résines époxydes usuelles de la technologie des matières plastiques et des revêtements, le cas échéant en combinaison avec les catalyseurs, additifs et auxiliaires usuels de la technologie des matières plastiques et des revêtements, pour des revêtements de ballast.
